# EUROPEAN PATENT SPECIFICATION

(11) **EP 4 141 692 B1**
(45) Date of publication and mention of the grant of the patent: **08.07.2026**
(21) Application number: 21306169.0
(22) Date of filing: 30.08.2021
(51) Int. Cl.: G06F 16/25, G06F 16/21, G06F 16/23

(54) **DATABASE CHECKING CONVERSION**
KONVERTIERUNG VON DATENBANKPRÜFUNGEN
CONVERSION DE VÉRIFICATION DE BASE DE DONNÉES

(43) Date of publication of application: 01.03.2023
(73) Proprietor: Mitsubishi Electric R&D Centre Europe B.V., 1119 NS Schiphol Rijk Amsterdam (NL); MITSUBISHI ELECTRIC CORPORATION, Chiyoda-ku Tokyo 100-8310 (JP)
(72) Inventor: BOYER, Benoit, 35708 RENNES CÉDEX 7 (FR); Kataoka, Eri, TOKYO, 100-8310 (JP)
(74) Representative: Plasseraud IP

(56) References cited:
- EP-A1- 1 172 735
- WO-A1-2011/056087
- US-A1- 2009 282 067
- US-A1- 2021 117 445

## Description

### FIELD OF THE INVENTION

This invention relates to a method for checking conversion of an input database to an output database.

### BACKGROUND

WO 2011/056087 concerns DECLARATIVE AND UNIFIED DATA TRANSITION.
EP 1 172 735 concerns Database conversion or integration.
US 2009/282067 concerns SYSTEM AND METHOD FOR GENERATING CONTROL SYSTEM DATABASE AND GRAPHICS FROM SCHEMA-BASED INTERMEDIATE DESCRIPTIONS.
US 2021/117445 concerns TECHNOLOGIES FOR DATA CAPTURE AND DATA ANALYSIS.

Numerous critical systems have been developed following software rigorous methodologies in order to prevent issues in such critical systems due to software side effects. For example, in the public transportation, companies manufacturing software element of transport systems must fit the requirements of norms guaranteeing the safety of the passengers. Such software is generally known as certified software.

Although software is certified according to norms, data feeding the certified software also bring issues for the critical systems. Indeed, certified software ensures that for a given input, the output is computed as expected by the functional specification provided by the software documentation. However, since the input may be determined based on data, if the data are wrong, the output of the certified software will be wrong too. Hence, such data feeding certified software may be considered as critical as the software itself.

Moreover, numerous data sets provided for certified software does not fit the input data formats expected by certified software.

The critical data should therefore be converted and validated before being transferred into the certified software. Data validations are laborious, expensive, time consuming and subject to errors since they are most of the time manually checked by human validators. In particular, errors in the data due to the human validation may lead a critical system to an unexcepted defaults and therefore increase risks of accidents for people using the critical system.

Moreover, data validations are, most of the time, implemented before the data conversion and such conversion may corrupt some data. That is, even if the data sets are validated, some issues regarding the data may occur with the conversion and the certified software is then fed with some corrupted data due to the conversion.

Hence, there are safety interests to improve such situations of data conversion and validation for critical systems and, more generally, for any system in order to ensure their good functioning.

### SUMMARY

The invention is defined in the independent claims. Advantageous features are described in the dependent claims. An object of the present disclosure is therefore to propose a computer-implemented method for checking conversion of an input database having an input format to an output database having an output format in order to ensure that transformation functions does not forget or does not corrupt input data when executed.

Another object of the present disclosure is to validate that the output data of the output database are conformed to specifications after the conversion.

In order to reach these objects, the present disclosure proposes a computer-implemented method for checking conversion of an input database having an input format to an output database having an output format, the input database comprising a plurality of input data, the method comprising:
- accessing to:
   * an input data model determined on the basis of the input format,
   * an output data model determined on the basis of the output format, and
   * a formal conversion model determined on the basis of the input and on a plurality of conversion rules,
- providing the plurality of input data from the input database into the input data model in order to obtain modelized input data;
- executing a plurality of conversion rules to convert the modelized input data of the input data model into modelized converted data of the formal conversion model based on a second data validation tool;
- providing the plurality of output data from the output database into the output data model in order to obtain modelized output data;
- using a third data validation tool to check validity of a plurality of equivalence properties between the modelized converted data and the modelized output data;
- said method thereby:
   * verifying that the output data model and the formal conversion model share both same modelized data during implementation of the method.

Such a method allows checking whether the transformation functions does not forget or does not corrupt input data using data validation tools. The data conversion is therefore checked closely and promptly by certified software thereby reducing the human error. Hence, the method increases the safety and the confidence in the output data while reducing the cost of the verification. Furthermore, as long as both formats of input database and output database does not change, the method can still be implemented with the same efficiency in term of speed and cost independently of the modification of the input data.

Optionally, the method further comprises verifying a conformity of the modelized input data to a plurality of first conformity rules based on a first data validation tool. Verifying the conformity of the modelized input data to a plurality of first conformity rules allows the method to quickly and exhaustively validate the input data using certified computer routines thereby reducing both the cost and the errors induced by human validation of the input data.

Optionally, when the modelized input data are not in conformity with at least one first conformity rules, the method is stopped or the method further comprises returning the at least one first conformity rules and/or the modelized input data for which the at least one first conformity rules is not satisfied. This option allows quickly and exhaustively determining input data of the input database which do not comply with the first conformity rules based on certified computer routines. The determination of the input data may allow, for example, checking and correcting the concerned input data if needed or identifying and correcting the concerned first conformity rules if the concerned input data comply with the specifications of the input database used to determine said concerned first conformity rules.

Optionally, the method further comprises verifying a conformity of the modelized output data to a plurality of second conformity rules based on a fourth data validation tool, the method thereby providing that the modelized output data are in conformity with said second conformity rules. This allows the method to quickly and exhaustively validate the output data using certified computer routines thereby reducing both the cost and the errors induced by human validation.

Optionally, when the modelized output data are not in conformity with at least one second conformity rule, the method further comprises returning the at least one second conformity rule and/or the modelized output data for which the at least one second conformity rule is not satisfied. This option allows quickly and exhaustively determining output data of the output database which do not comply with the second conformity rules based on certified computer routines. The determination of the output data may allow, for example, checking and correcting the concerned output data if needed or identifying and correcting the second conformity rules if the checked output data comply with the specifications of the output database used to determine said concerned second conformity rules.

Optionally, the conformity rules comprise mathematical definitions applied to a dedicated model. This allows reducing human mistakes in the transcription of the conformity rules of the database into executing instructions.

Optionally, a data validation tool is a SMT-solver or a model-checker. Both SMT-solver and model-checker allow efficient verifications of the modelized data.

Optionally, the input data model is defined in the first data validation tool and providing the plurality of input data comprises loading the input data from the input database into the input data model of the first data validation tool. Such loading allows bringing the input data into the input data validation model of the first data validation tool for their further treatments.

Optionally, the output data model is defined in the third data validation tool and providing the plurality of output data comprises loading the output data from the output database into the output data model of the third data validation tool. Such loading allows bringing the output data in the output data validation model in the third data validation tool for checking the equivalence properties and the second conformity rules by certified routines.

Optionally, the conversion rules are implemented by execution of computer routines defined by mathematical descriptions corresponding to theoretical results of transformation functions. Computer routines defined by mathematical description of transformation functions allow:
- reducing the human mistakes when defining the conversion rules to pass from the input database model to the formal conversion model,
- automatic execution by a data validation tool which is certified and therefore allow reducing side-effects of functions being implemented by traditional computer means.

Optionally, the plurality of second conformity rules comprises the plurality of first conformity rules and a plurality of output conformity rules linked to the output format. This allows checking whether the output data are complying with the first conformity rules and with rules linked to the output format.

Optionally, the input data model, output data model and formal conversion model are declarative mathematical structures linking modelized data using relational algebra. Relational algebra allows linking the data of data models in a more understanding manner for the data experts defining these data models and therefore allows facilitating debugging said data models when mistakes appear after loading of the modelized data in the data models.

Optionally, the input data model and the output data model are respectively determined based on a plurality of input rows and a plurality of input columns of the input format of the input database and on a plurality of output rows and a plurality of output columns of the output format of the output database. This allows making the link between both input and output databases and both input and output data models respectively.

Optionally, the plurality of equivalence properties comprises equality properties and/or inclusions properties between a sub-set of modelized converted data and a sub-set of modelized output data. This allows reducing the human mistakes when verifying whether the output data model and the formal conversion model share both same modelized data since the equality and the inclusion are mathematical operators extremely clear and concise.

Optionally, when an equivalence property is not satisfied, the method further comprises returning a counter-example corresponding to a modelized data of at least one of the formal conversion model and output data model for which the property is not satisfied. This allows tracking and finding modelized data that formal conversion model and output data model does not have in common.

The present disclosure describes a computer-readable storage medium comprising instructions which, when executed by a processor, cause the processor to carry out any of the methods hereby described.

The present disclosure also describes a computer program product comprising instructions which, when the program is executed by a computer, cause the computer to carry out any of the methods hereby described.

The present disclosure finally describes a computer device comprising a processing circuit having access to:
- an input database,
- an output database,
- an input data model,
- a formal conversion model, and
- an output data model,
wherein the processing circuit is adapted to implement any of the methods hereby described.

### BRIEF DESCRIPTION OF THE DRAWINGS

Figure 1 illustrates an example of software architecture for implementing an example of a method checking a database conversion.
Figure 2 illustrates an example of a method for checking a database conversion.
Figure 3 illustrates an example of a computer device.
Figure 4 illustrates an example of conversion of an input database to an output database.
Figure 5 illustrates an example of the architecture of the different data in the different databases and data models.
Figure 6 illustrates an example of architecture for data loading from databases to corresponding data models.
Figure 7a illustrates an example of architecture for applying a plurality of first conformity rules on modelized input data.
Figure 7b illustrates an example of architecture for applying a plurality of second conformity rules on modelized output data.
Figure 8a illustrates an example of architecture for obtaining a formal conversion model.
Figure 8b illustrates an example of architecture for obtaining modelized converted data.
Figure 9 illustrates an example of architecture for checking a plurality of equivalent properties.

### DETAILED DESCRIPTION

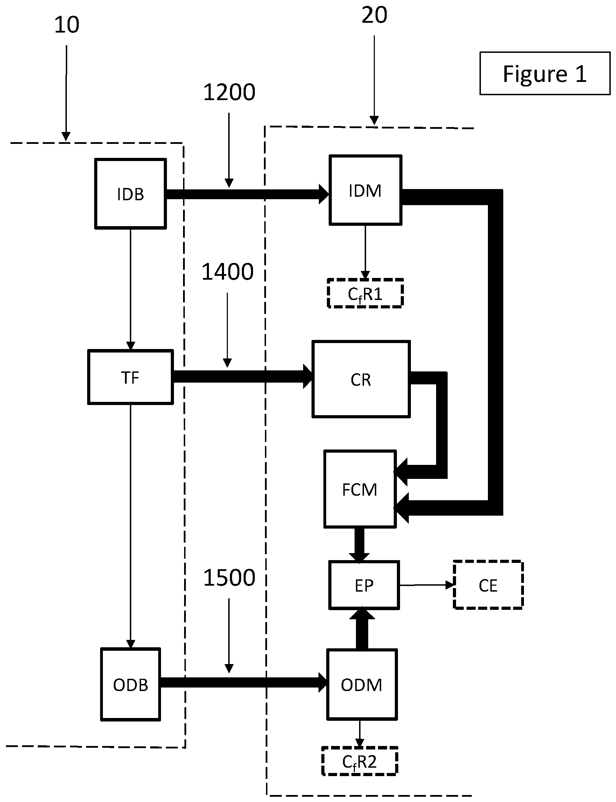

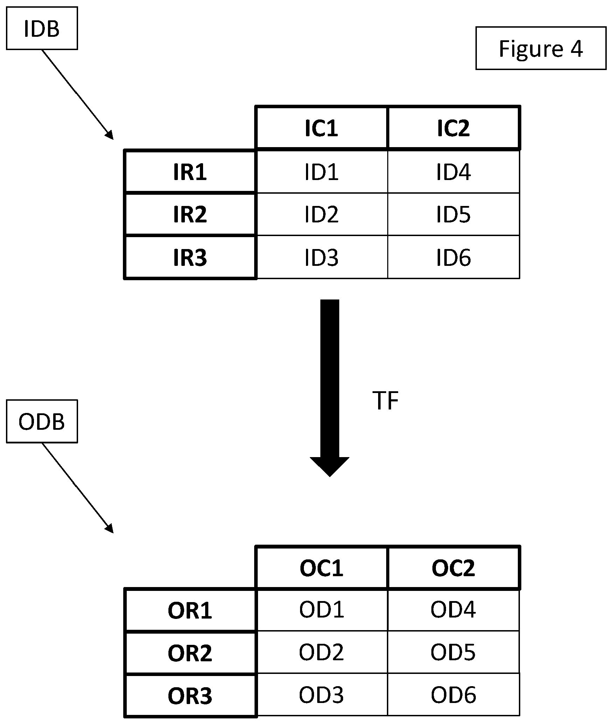

The disclosure concerns checking a conversion of an input database IDB having an input format to an output database ODB having an output format. The input format and the output format are different data formats. The conversion from the input format to the output format is realized by transformation functions TF. The output format may for example correspond to an excepted format of a certified software. Such conversion is illustrated by software elements in a first dotted half-box 10 in the software architecture of figure 1 and more precisely by the figure 4.

### Transformation functions:

By transformation functions TF, the present disclosure describes the functions used to convert input data of the input format into output data of the output format. More precisely, a transformation function TF defines algorithm steps indicating how to perform a transformation of an input data or a set of input data into an output data or a set of output data. Hence, by applying the transformation functions TF on the input data of the input database, we obtain the output data of the output database.

Both input and output databases may comprise data D (respectively ID for input data and OD for output data) associated with rows R (respectively IR for input row and OR for output row) and associated with columns (respectively IC for input column and OR for output column). In some examples, the data D may for example be organized in cells, tables or lists or a mix of them.

In some examples, data D may be identified in a database based on a key of the database. A key is associated to a row R of the database and is associated to one or more columns C of the tables such that a key allows to find other data elements of the row R.

In the illustrated example, each database comprises one table. However, the illustrated example is a simplified example and therefore, a database may comprise several tables or several lists linking the data D to rows R and columns C. A format of a database, i.e. a data structure of a database may be expressed by a database schema. An example of input database or output database may for example be an Excel file or a csv file.

Databases having different data formats means that the data D are organized in the databases in a different way, i.e. with a different database schema. In some examples, databases having different format may mean that the data of the databases are not associated to the same rows, columns, key, lists or tables.

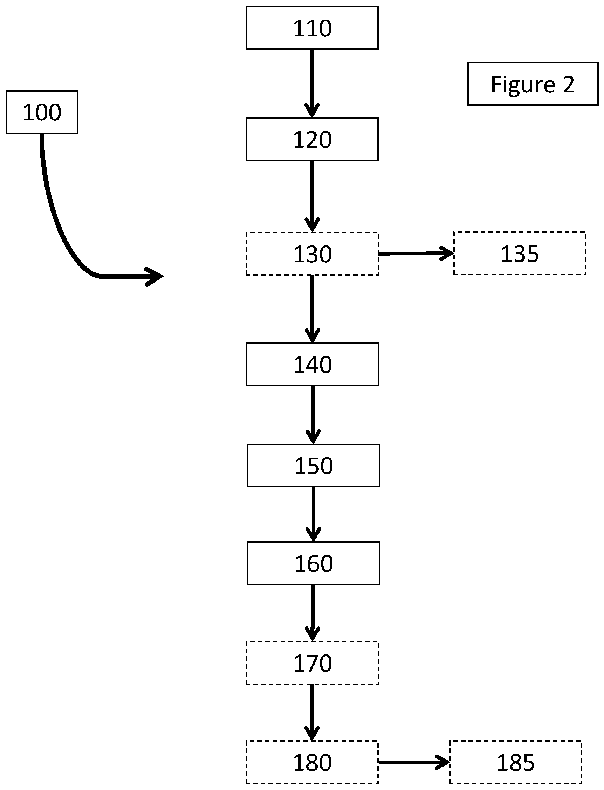

As mentioned in the background part, the process of conversion of a database is a sensitive issue and methods presented below in reference to figure 2 ensures that such conversion does not lead to forget or corrupt any input data ID during said conversion process.

### Computer device 1:

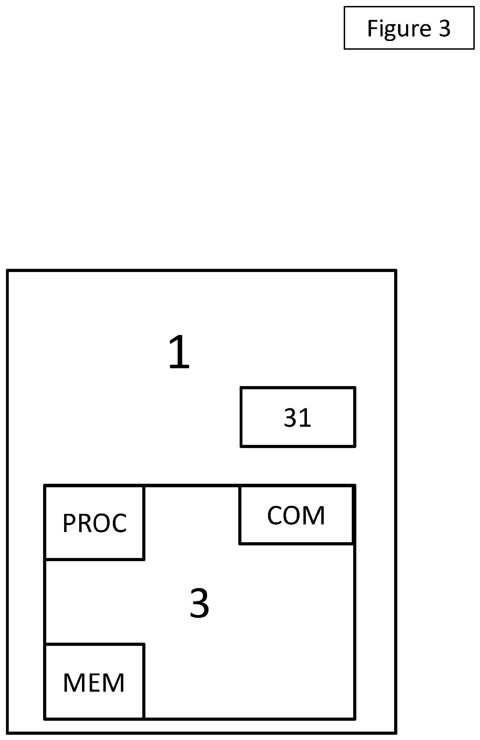

The methods can be implemented by a processing circuit 3 of a computer device 1 as illustrated in figure 3.

### Processing circuit 3 and memory MEM:

The processing circuit 3 may be configured to operate according to any of the methods hereby described. Processing circuit 3 may comprise electronic circuits for computation managed by an operating system, for example a processor PROC. Processor PROC may for example be a controller or a microcontroller.

The processing unit 3 may comprise at least a non-transitory machine-readable or at least a computer readable storage medium, such as, for example, a memory MEM whereby the non-transitory machine-readable storage medium is encoded with instructions executable by a processor such as processor PROC, the machine-readable storage medium comprising instructions to operate processor 3 to perform as per any of the methods hereby described.

A computer readable storage according to this disclosure may be any electronic, magnetic, optical or other physical storage device that stores executable instructions. The computer readable storage may be, for example, Random Access Memory (RAM), Real Only Memory (ROM), an Electrically Erasable Programmable Read Only Memory (EEPROM), a storage drive, and optical disk, and the like.

As described hereby, the computer readable storage may be encoded with executable instructions according to any of the methods hereby described. The memory MEM may include any electronic, magnetic, optical or other physical storage device that stores executable instructions as described hereby.

In some examples, the memory MEM may store the input data ID of the input database IDB and the output data OD of the output database ODB.

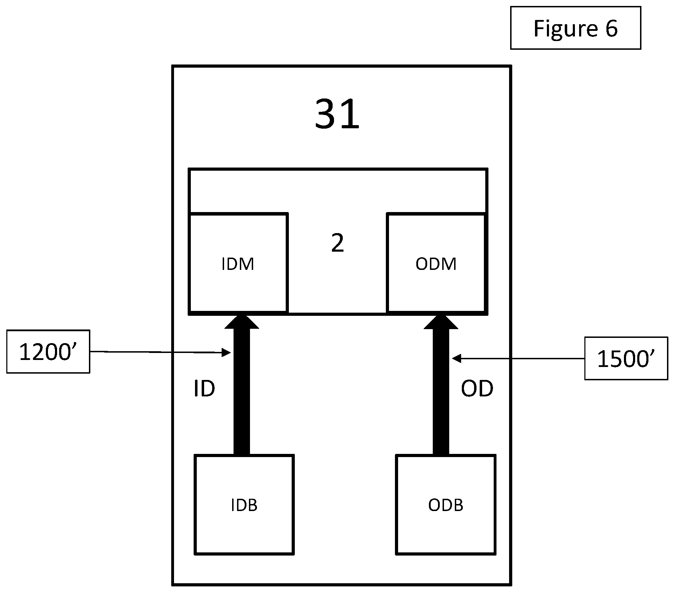

In some examples and as illustrated in figure 6, a storage unit 31 may store the input database IDB and the output database ODB. The storage unit 31 may comprise the same technologies as the memory MEM.

The storage unit 31 may be comprised in the processing unit 3. The storage unit may be external from the processing unit 3 as represented in figure 3. In both cases, the processor PROC has access to the storage unit 31 such that the processor PROC can use the resources contained in the storage unit 31.

In some examples, when the storage unit 31 are not comprised in the processing unit 3, the processing unit 3 may comprise a communication unit COM communicating with the processor PROC and with the storage unit 31 such that the processor PROC has access to the storage unit 31.

The memory MEM or the storage unit 31 may also comprise at least one data validation tool 2 as illustrated in figure 6. The processor PROC therefore can have access to the at least one data validation tool 2.

### Data validation tool 2:

A data validation tool 2 should be understood in the present description as a certified software comprising certified computer routines being able to implement at least one of the following actions:
- verifying a plurality of conformity rules C_{f}R on modelized data of a data model,
- executing a plurality of conversion rules CR on modelized data of a data model,
- checking validity of a plurality of equivalence properties EP between modelized data of data models.

In some examples, a data validation tool 2 may for example be a SMT-solver or a model-checker. Several data validation tools 2 will be introduced during the description of the method but, since they can all correspond to the same data validation tool (i.e. same certified software able to implement all the actions where a data validation tool 2 is needed in the presented methods), figures of the present disclosure represent each of them by the same reference 2.

### Data model:

A data model should be understood in the present disclosure as a mathematical representation comprising declarative mathematical structures describing a format or a data schema of a database. A data model comprises modelized data and corresponds to declarative mathematical structures linking said modelized data.

In some examples, a data model associated to a database may correspond to declarative mathematical structures linking its modelized data based on the links of data D of the database to rows R and columns C of the database or based on the links of data D of the database to a key and columns C of such database. In some examples, a data model is determined based on relational algebra.

Conformity rules C_{f}R, conversion rules CR and equivalence properties EP are built for data models and are applied on modelized data in the data models. This means that even if the values of modelized data contained in the data models are modified, conformity rules C_{f}R, conversion rules CR and equivalence properties EP can still be applied, without being modified, on the modified values of modelized data since the links between the modelized data itself are not modified, i.e. since the data model is not modified.

### Data and modelized data:

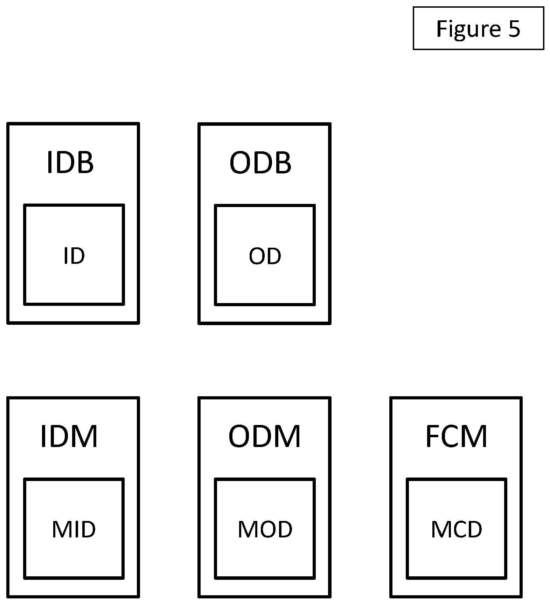

It should be noted that the present description distinguishes the "data" from the "modelized data". In the present disclosure:
- the input data ID correspond to the data of the input database IDB while the modelized input data MID correspond to the data of the input data model IDM,
- the modelized converted data MCD corresponds to the data of the formal conversion model FCM, and
- the output data OD correspond to the data of the output database ODB while the modelized output data MOD correspond to the data of the output data model ODM.
These architectures of data in databases and modelized data in data models are illustrated in figure 5. It should also be noted that a modelized data is part of a theoretical model (data model) and does not have a value before being instanced.

Since the method is applied to a verification of a data conversion, the values of modelized data used in the data models are values obtained from values of input data ID of the input database IDB and from values of output data OD of the output database ODB. The difference is made here for the comprehension of the present invention but it is clear that is does not make any sense to check a data conversion from two databases using other data than the data contained in said databases.

In the software architecture represented in figure 1, the modelized data are the data used by the software elements in a second dotted half-box 20 while the data are the data used by the software elements in the first dotted half-box 10.

### Conformity rules C_{f}R:

A conformity rule C_{f}R should be understood in the present disclosure as a mathematical definition applicable to modelized data and adapted to feed a data validation tool 2. A conformity rule C_{f}R may be transcripted from a requirement expressed in natural language in specifications of a database.

Examples of mathematical definitions illustrating what are conformity rules for a database are exposed below:
- First example: ∀ seg, SEG_SIZE(seg) ≤ MAX_SIZE,
   The mathematical definition of the first example of conversion rules means that the size (a segment size being a column of the database) of every segment (a segment being a mathematical structure of the database, for example associated to a table) of the database should have a length lower than a maximum size (here, MAX_SIZE).
- Second example: ∀ seg, SEG_SIZE(seg) ≥ MIN_SIZE,
   The mathematical definition of the second example of conversion rules means that the size of every segment of the database should have a length greater than a minimum size (here, MIN_SIZE).

Examples of conformity rules C_{f}R above are, of course, not exhaustive examples and are used here to illustrate to the person skilled in the art what are the conformity rules. The person skilled in the part will easily recognize the link between specifications of a database in natural language and the conformity rules transcripted as mathematical definitions above.

### Conversion rules:

A conversion rule CR should be understood in the present disclosure as mathematical descriptions defining a theoretical result of a transformation function TF, built on a data model and which can be implemented on modelized data of said data model by a data validation tool.

Actually, a transformation function TF defines algorithm steps indicating how to perform a transformation of an input data or a set of input data into an output data or a set of output data while a conversion rule CR defines mathematical descriptions corresponding to a theoretical result of the algorithm steps of a corresponding transformation function TF. The arrow 1400 of figure 1 represents the link between the transformation functions TF and the conversions rules CR.

### Equivalence properties EP between modelized data of data models:

An equivalence property EP between data models should be understood in the present disclosure as a mathematical comparison between values of modelized data of the data models belonging to corresponding mathematical structures in the data models.

In other words, checking equivalence properties EP between modelized data of data models may correspond to verify that values of modelized data associated with the mathematical structures of the first data model are comprised in the corresponding mathematical structure of the second data model and vice-versa.

In some examples, equivalence properties comprise equality properties and/or inclusions properties between a sub-set of modelized data of a first data model and a sub-set of modelized data of a second data model.

Concrete examples of mathematical comparison illustrating what are the equivalent properties between data models are exposed below:
- First example: ∀ index ∈ DM1_ name, DM1_ name(index) = DM2_name(index), The mathematical comparison of the first example of equivalent properties checks that all the names (a name being a value associated to an instanced modelized data of a mathematical structure of the data models) of a first data model DM1 are equal to the names of the second data model DM2 having a corresponding index.
- Second example: ∀ segment ∈ DM1, DM1_seg(segment) ⊆ DM2_seg(segment), The mathematical comparison of the second example of equivalent properties checks that all the segments (a segment being a mathematical structure of the data models and comprising a plurality of values associated to instanced modelized data, for example a name) of a first data model DM1 are included by the segments of the second data model DM2.

### Example method 100:

In reference to figure 2, the present disclosure will present below an example of a computer-implemented method 100 for checking conversion of an input database having an input format to an output database having an output format.

As illustrated by the bloc 110, the method comprises accessing to:
- an input data model IDM determined on the basis of the input format,
- an output data model ODM determined on the basis of the output format, and
- a formal conversion model FCM determined based on the application of the conversion rules CR in the input data model IDM.

The data models and their respective modelized data may, for example, be stored in the memory MEM or in the storage unit 31 as represented in figure 6 with the input data model IDM and the output data model ODM. In any cases, the processor PROC implementing the method 100 has access to the data models and their modelized data such that the processor PROC can use it.

### Determination of the input data model IDM:

The input data model IDM is determined based on the input format of the input database IDB, i.e. based on an input data schema of the input database. The input data model IDM may correspond to declarative mathematical structures linking its modelized input data MID. The mathematical structures linking the modelized input data MID of the input data model IDM may be determined based on the links between input data ID, input rows IR and input columns IC of the input database IDB. The mathematical structures linking the modelized input data MID of the input data model IDM may be determined based on the links between input data ID, an input key and input columns IC of the input database IDB.

In some examples, the input data model may be determined based on a plurality of input rows IR and a plurality of input columns IC of the input format of the input database IDB. In some examples, the input data model IDM may be determined based on an input key and on a plurality of input columns IC of the input format of the input database IDB. In some examples, the input data model IDM is determined based on relational algebra applied on input data ID of the input database IDB.

### Determination of the output data model ODM:

The output data model ODM is determined based on the output format of the output database ODB, i.e. based on an output data schema of the output database. The output data model ODM may correspond to declarative mathematical structures linking its modelized output data MOD. The mathematical structures linking the modelized output data MOD of the output data model ODM may be determined based on the links between output data OD and output rows OR and output columns OC. The mathematical structures linking the modelized output data MOD of the output data model ODM may be determined based on the links between output data OD and an output key and output columns IC of such output database ODB.

In some examples, the output data model may be determined based on a plurality of output rows OR and a plurality of output columns OC of the output format of the output database ODB. In some examples, the output data model ODM is determined based on an output key and on a plurality of output columns OC of the output format of the output database ODB. In some examples, the output data model ODM may be determined based on relational algebra applied on output data OD of the output database ODB.

### Determination of the formal conversion model FCM:

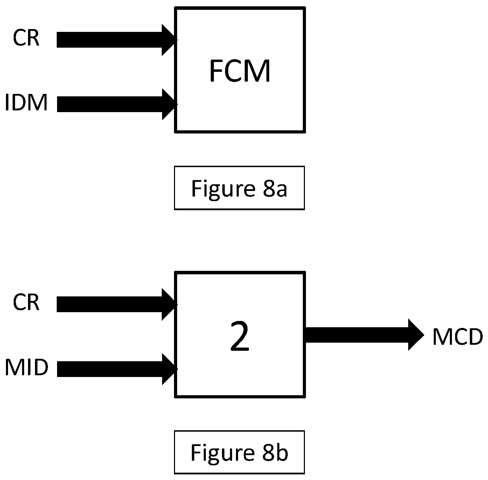

The formal conversion model FCM is determined based on a plurality of conversion rules CR built on the input data model IDM. By built on the input data model IDM, it should be understood that the conversion rules CR do not depend on values of modelized input data MID but depend directly on the input data model IDM, i.e. on the links between the modelized input data MID. In other words, by modifying values of modelized input data MID in the input data model IDM, the conversion rules CR can still be applied on the input data model IDM since the conversion rules CR are linked to the input data model IDM and not to the values of modelized input data IDM itself. Hence, figure 8a illustrates that the formal conversion model FCM (regardless of the values of modelized converted data MCD within) is obtained based on the application of the conversion rules CR on the input data model IDM.

As illustrated by the bloc 120, the method comprises providing the plurality of input data ID from the input database IDB into the input data model IDM in order to obtain modelized input data MID. Obtaining the modelized input data should be understood here as instantiating the modelized input data MID. The bloc 120 is illustrated by the arrow 1200 in the software architecture of figure 1.

In other words, the bloc 120 populates the declarative mathematical structures of the input data model IDM with the corresponding input data ID of the input database IDB in order to instantiate the modelized input data MID.

As said above, the method applies to check the conversion of the input database IDB into the output database ODB. Hence, the input data ID contained in the input database IDB have to be used for the verification.

In some examples, the input data model IDM is defined in a first data validation tool 2 and providing the plurality of input data ID comprises loading the input data ID from the input database IDB into the input data model IDM of the first data validation tool 2. By loading the input data ID from the input database IDB into the input data model IDM, it should be understood here that mathematical structures linking modelized input data MID of the input data model IDM are instantiated with the corresponding input data ID of the input database IDB to obtain values of the modelized input data MID. Such examples are illustrated by the arrow 1200' in figure 6.

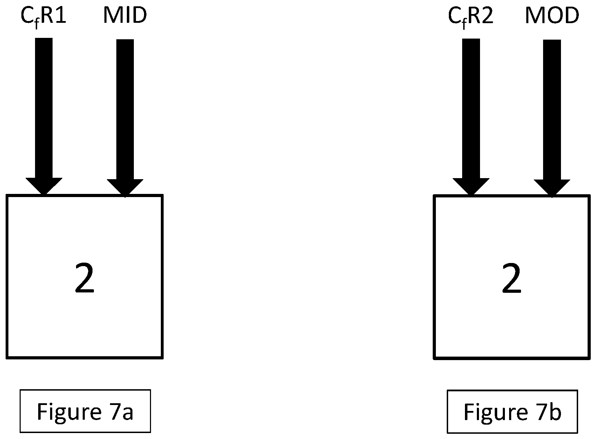

Facultatively and as illustrated by the bloc 130, the method may comprise verifying a conformity of the modelized input data MID to a plurality of first conformity rules C_{f}R1 based on the first data validation tool 2. The bloc 130 of the method corresponds to the software element C_{f}R1 of the software architecture represented in figure 1. The bloc 130 is also represented more precisely in figure 7a.

The first data validation tool 2 therefore comprises a certified computer routine implementing a verification of a plurality of conformity rules C_{f}R (here, first conformity rules C_{f}R1) on modelized data (here, modelized input data MID) of a data model (here, the input data model IDM).

The first conformity rules C_{f}R1 may be determined based on the type of the data application and on the format of the input database IDB. In some examples, at least a part of the first conformity rules C_{f}R1 may be determined based on a transcription of requirements expressed in natural language comprised in specifications of the input database IDB.

In some examples, when the modelized input data MID are not in conformity with at least one first conformity rules C_{f}R1, the method can be stopped.

In some other examples, when the modelized input data MID are not in conformity with at least one first conformity rules C_{f}R1, the method may further comprise returning the at least one first conformity rules C_{f}R1 and/or the modelized input data MID for which the at least one first conformity rules C_{f}R1 is not satisfied. Such examples are illustrated by the bloc 135 in figure 2. These examples allow quickly and exhaustively determining input data ID of the input database IDB which do not comply with the first conformity rules C_{f}R1 based on certified computer routines. The determination of the input data may allow, for example, checking and correcting the concerned input data ID if needed or identifying and correcting the concerned first conformity rules C_{f}R1 if the concerned input data ID comply with the specifications of the input database IDB used to determine said concerned first conformity rules.

As illustrated by the bloc 140, the method comprises executing a plurality of conversion rules CR to convert the modelized input data MID of the input data model IDM into modelized converted data MCD of the formal conversion model FCM based on a second data validation tool 2. The arrows linking both CR and IDM software elements to the FCM software element in the software architecture of figure 1 illustrates the bloc 140 of the method.

The second data validation tool 2 therefore comprises a certified computer routine implementing an execution of a plurality of conversion rules CR on modelized data (here, modelized input data MID) of a data model (here, the input data model IDM).

The conversion rules CR therefore correspond in the method 100 to mathematical descriptions defining theoretical results of transformation functions TF, built on the input data model IDM and which are implemented on the modelized input data MID by the second data validation tool 2.

The conversion rules CR are therefore applied in the modelized input data MID of the input data model IDM in order to obtain the modelized converted data MCD, i.e. in order to instantiate the modelized converted data MCD. The modelized converted data MCD are therefore the result of the conversion rules CR on the modelized input data MID as illustrated in figure 8b.

As said above, the formal conversion model FCM (i.e. the mathematical structures linking the modelized converted data MCD and forming the formal conversion model FCM) is directly dependent on the input data model IDM and on the conversion rules CR as illustrated in figure 8a.

It should be noted again that a person skilled in the art will obtain a different formal conversion model FCM in the case where the input data model IDM or the conversion rules CR are modified. However, a person skilled in the art will not obtain a different formal conversion model FCM whether neither the model IDM nor the conversion rules CR are not modified.

In fact, when the input data ID are modified, the values of modelized input data MID are modified and therefore the values of modelized converted data MCD are modified but the input data model IDM (the links between the modelized input data MID) and the formal conversion model FCM (the links between the modelized converted data MCD) are not modified.

The formal conversion model FMC can therefore be formed by mathematical structures fitting with the transformation of the mathematical structures of the input data model IDM under the effect of conversion rules CR. Hence, it should be noted here that the formal conversion model FMC depends on both input data model IDM and conversion rules CR and therefore, when at least one of them is modified, the formal conversion model FCM is also modified by definition.

As illustrated by the bloc 150, the method comprises providing the plurality of output data OD from the output database ODB into the output data model ODM in order to obtain modelized output data MOD. The bloc 150 is illustrated by the arrow 1500 in the software architecture of figure 1. Obtaining the modelized output data MOD should be understood here as instantiating the modelized input data MOD.

In other words, the bloc 150 populates the declarative mathematical structures linking modelized output data MOD of the output data model ODM with the corresponding output data OD of the output database ODB in order to instantiate the modelized output data MOD.

As said above, the method applies to check the conversion of the input database IDB into the output database ODB. Hence, the output data OD contained in the output database ODM have to be used for the verification.

In some examples, the output data model ODM is defined in a third data validation tool 2 and providing the plurality of output data OD comprises loading the output data OD from the output database ODB into the output data model ODM in the third data validation tool 2. By loading the output data OD from the output database ODB into the output data model ODM, it should be understood here that the modelized output data MOD of the mathematical structures of the output data model ODM are instantiated with the corresponding output data OD of the output database ODB in order to obtain values of modelized output data MOD. Such examples are illustrated by the arrow 1500' in figure 6.

The bloc 150 of the method can be implemented before the bloc 160 described below but not necessarily after the bloc 140 as represented in figure 2. Indeed, the bloc 150 only needs the output data OD from the output database ODB and the output data model ODM to be implemented.

In some examples, the bloc 150 of the method may be implemented after the bloc 130 of verification of the first conformity rules C_{f}R1 in the modelized input data IDM since the method may be stopped after this bloc in case of non-conformity with at least one of the first conformity rules C_{f}R1.

As illustrated by the bloc 160, the method comprises using the third data validation tool 2 to check validity of a plurality of equivalence properties EP between the modelized converted data MCD and the modelized output data MOD. In other words, the modelized converted data MCD of the formal conversion model FCM and the modelized output data MOD of the output data model ODM are checked to evaluate whether they are equivalent using the third data validation tool 2.

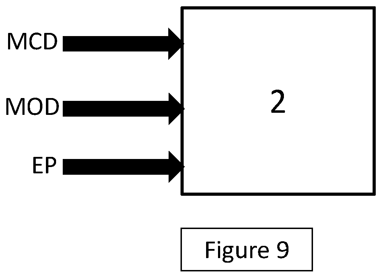

The arrows linking both formal conversion model FCM and output data model ODM to the equivalence properties EP represent the bloc 160 of the method in the software architecture of figure 1. The bloc 160 of the method is also illustrated in figure 9.

The third data validation tool 2 therefore comprises a certified computer routine implementing a check of a plurality of equivalent properties EP between modelized data (here, modelized converted data MCD and modelized output data MOD) of data models (here, formal conversion model FCM and output data model ODM).

In some examples, the equivalent properties EP comprises equality properties and/or inclusions properties between a sub-set of modelized converted data MCD and a sub-set of modelized output data MOD. A sub-set modelized converted data MCD and a sub-set of modelized output data MOD may, for example, comprise a corresponding modelized data or a corresponding mathematical structure in the formal conversion FCM model and in the output data model ODM.

As said above for the conversion rules CR and for the conformity rules C_{f}R, the equivalent properties EP are built on data models and are applied on the modelized data obtained in the data models. The equivalent properties are therefore independent of the values of the modelized data in the data models and changing the modelized data in the data models does not affect the equivalent properties.

The modelized output data MOD represent the data obtained from the conversion of the input data ID contained in the input database IDB into the output data OD of the output database ODB. The modelized converted data MCD represent the data contained in the formal conversion database FCM and therefore represent the data obtained from the conversion of the modelized input data MID using the conversion rules CR (i.e. the mathematical descriptions defining theoretical results of the transformation functions TF of the input data ID of the input database).

Hence, by checking the validity of equivalence properties on both modelized converted data MCD and modelized output data MOD, the method allows checking whether the transformation functions TF applied in the input data ID of the input database IDB does not forget or does not corrupt input data ID using the third data validation tool 2.

The conversion is therefore rapidly checked, data by data, by certified computer routines. Hence, the method allows reducing the human errors on the whole process of conversion checking.

Moreover, the method is also independent of the data and can be implemented even if the data are modified as long as the data models and the conversion rules are not modified. In other words, the method can check the conversion of several sets of input data ID of the input database IDB in few minutes since the formats of both input and output databases does not change without any human intervention nor additional costs. Such checking, in the state of the art, is manually done by data validators and therefore, for big sets of data, the time scale for the checking may be several months with a huge probability of human mistakes.

Furthermore, the data validation is most of the time used for critical systems, the human mistakes may lead to hurt the users of the system or to damage the system itself. The method disclosed by the invention therefore protects the users and the system.

### Interests of the software architecture of figure 1:

The software architecture illustrated in figure 1 therefore represents a duality of conversions of data. Indeed, the conversion of the input database IDB into the output database ODB which is checked by the method is represented in one side and another conversion of the input data model IDM into formal conversion model FCM using conversion rules CR is illustrated on the other side. Then, by a comparison of both conversions using equivalence properties EP in a data validation tool, the checking of the conversion of the input database IDB into the output database ODB is ensured by certified computer routines of said data validation tool.

Moreover, the conversion of the input database IDB into the output database ODB to be checked does not generate the output data based on a data validation tool. Such generation in a data validation tool may imply increasing a level of certification of said data validation tool, for example in some critical fields as aeronautic or railway systems. Indeed, data validation tools as SMT-solvers or model-checkers are generally certified to verify that a database complies with some mathematical rules determined based on the specification of said database but are not certified to make a conversion of said database into another database.

Actually, in the presented computer-implemented method 100, only the checking of the conversion and not the conversion itself is based on a data validation tool. This implies that the presented method of database conversion checking can be implemented without modifying any software elements of an existing database conversion method implemented on a system. Such method could therefore be an alternative or a complement of methods of database conversion checking when existing, for example human checking methods, which therefore improves the efficiency of the verification.

In some examples, when an equivalence property is not satisfied, the method further comprises returning a counter-example corresponding to a modelized data of at least one of the formal conversion model and the output data model for which the equivalent property is not satisfied. Such return is illustrated by the bloc 170 of the method in figure 2 and by the software element CE in the software architecture of figure 1. This allows tracking and finding modelized data that formal conversion model and output data model does not have in common, for example to determine and correct mistakes in the transformation functions TF.

Facultatively, the method may further comprise verifying a conformity of the modelized output data to a plurality of second conformity rules based on a fourth data validation tool 2. Such verification is illustrated by the bloc 180 of the method in figure 2, and by software element C_{f}R2 in the software architecture of figure 1. The verification is more precisely represented in figure 7b. The method thereby provides that the modelized output data are in conformity with second conformity rules.

The fourth data validation tool 2 therefore comprises a certified computer routine implementing a verification of a plurality of conformity rules C_{f}R (here, second conformity rules C_{f}R2) on modelized data (here, modelized output data MOD) of a data model (here, the output data model ODM).

In some examples, the plurality of second conformity rules C_{f}R2 comprises the plurality of first conformity rules C_{f}R1 and a plurality of output conformity rules linked to output format of the output database ODB.

In some examples, when the modelized output data MOD are not in conformity with at least one second conformity rules C_{f}R2, the method may further comprise returning the at least one second conformity rules C_{f}R2 and/or the modelized output data MOD for which the at least one second conformity rules C_{f}R2 is not satisfied. Such examples are illustrated by the bloc 185 in figure 2. These examples allow quickly and exhaustively determining output data OD of the output database ODB which do not comply with the second conformity rules C_{f}R2 based on certified computer routines. The determination of the output data may allow, for example, checking and correcting the concerned output data OD if needed or identifying and correcting the second conformity rules C_{f}R2 if the checked output data OD comply with the specifications of the output database ODB used to determine said concerned second conformity rules.

## Claims

1. A computer-implemented method for checking conversion of an input database having an input format to an output database having an output format, the input database comprising a plurality of input data, the method comprising:
- accessing (110) to:
* an input data model determined on the basis of the input format,
* an output data model determined on the basis of the output format, and
* a formal conversion model determined on the basis of the input data model and of a plurality of conversion rules (CR),
- providing (120) the plurality of input data (ID) from the input database (IDB) into the input data model (IDM) in order to obtain modelized input data (MID);
- executing (140) the plurality of conversion rules (CR) to convert the modelized input data (MID) of the input data model (IDM) into modelized converted data (MCD) of the formal conversion model (FCM) based on a second data validation tool (2), wherein executing the plurality of conversion rules (CR) comprises implementing, by the second data validation tool, certified computer routines executing said conversion rules (CR) on the modelized input data;
- providing (150) the plurality of output data (OD) from the output database (ODB) into the output data model (ODM) in order to obtain modelized output data (MOD);
- using (160) a third data validation tool (2) to check validity of a plurality of equivalence properties (EP) between the modelized converted data (MDC) and the modelized output data (MOD), wherein using the third data validation tool (2) to check validity of a plurality of equivalence properties (EP) comprises implementing, by the third data validation tool, certified computer routines checking the validity of the plurality of equivalence properties (EP);
and wherein the second data validation tool and the third data validation tool each correspond to a certified software being able to implement certified computer routines,
- said method thereby:
* verifying that the output data model (ODM) and the formal conversion model (FCM) share both same modelized data during implementation of the method.

2. The method according to the preceding claim, wherein the method further comprises verifying (130) a conformity of the modelized input data (MID) to a plurality of first conformity rules (C_{f}R1) based on a first data validation tool (2).

3. The method according to the preceding claim, wherein when the modelized input data (MID) are not in conformity with at least one first conformity rules (C_{f}R1), the method is stopped or the method further comprises returning (135) the at least one first conformity rules (C_{f}R1) and/or the modelized input data (MID) for which the at least one first conformity rules (C_{f}R1) is not satisfied.

4. The method according to any one of the preceding claims, wherein the method further comprises verifying (180) a conformity of the modelized output data (MOD) to a plurality of second conformity rules (C_{f}R2) based on a fourth data validation tool (2), the method thereby providing that the modelized output data (MOD) are in conformity with said second conformity rules (C_{f}R2).

5. The method according to the preceding claim, wherein when the modelized output data (MOD) are not in conformity with at least one second conformity rules (C_{f}R2), the method further comprises returning (185) the at least one second conformity rules (C_{f}R2) and/or the modelized output data (MOD) for which the at least one second conformity rules (C_{f}R2) is not satisfied.

6. The method according to any one of the preceding claims, wherein a data validation tool (2) is a Satisfiability Modulo Theories, SMT, solver or a model-checker.

7. The method according to any one of the preceding claims, wherein the input data model (IDM) is defined in the first data validation tool (2) and providing the plurality of input data (ID) comprises loading the input data (ID) from the input database (IDB) into the input data model (IDM) of the first data validation tool (2).

8. The method according to any one of the preceding claims, wherein the output data model (ODM) is defined in the third data validation tool (2) and providing the plurality of output data (OD) comprises loading the output data (OD) from the output database (ODB) into the output data model (ODM) of the third data validation tool (2).

9. The method according to any one of the preceding claims, wherein the conversion rules (CR) are implemented by execution of computer routines defined by mathematical descriptions corresponding to theoretical results of transformation functions (TF).

10. The method according to any one of the claims 4 to 9, wherein the plurality of second conformity rules (C_{f}R2) comprises the plurality of first conformity rules (C_{f}R1) and a plurality of output conformity rules linked to the output format.

11. The method according to any one of the preceding claims, wherein the input data model (IDM), output data model (ODM) and formal conversion model (FCM) are declarative mathematical structures linking modelized data using relational algebra.

12. The method according to any one of the preceding claims, wherein the plurality of equivalence properties (EP) comprises equality properties and/or inclusions properties between a sub-set of modelized converted data (MCD) and a sub-set of modelized output data (MOC).

13. The method according to any one of the preceding claims, wherein when an equivalence property (EP) is not satisfied, the method further comprises returning (170) a counter-example corresponding to a modelized data of at least one of the formal conversion model (FCM) and output data model (ODM) for which the equivalent property (EP) is not satisfied.

14. A computer program product comprising instructions which, when the program is executed by a computer, cause the computer to carry out a method of any of the above method claims.

15. A computer device (1) comprising a processing unit (3) having access to:
- an input database,
- an output database,
- an input data model,
- a formal conversion model, and
- an output data model,
wherein the processing circuit (3) is adapted to implement a method according to any one of claims 1 to 13.

## Patentansprüche

1. Computerimplementiertes Verfahren zum Prüfen einer Konvertierung einer Eingangsdatenbank, welche ein Eingangsformat aufweist, in eine Ausgangsdatenbank, welche ein Ausgangsformat aufweist, wobei die Eingangsdatenbank eine Mehrzahl von Eingangsdaten umfasst, wobei das Verfahren umfasst:
- Zugreifen (110) auf:
* ein Eingangsdatenmodell, welches auf der Basis des Eingangsformats bestimmt ist,
* ein Ausgangsdatenmodell, welches auf der Basis des Ausgangsformats bestimmt ist, und
* ein formales Konvertierungsmodell, welches auf der Basis des Eingangsdatenmodells und einer Mehrzahl von Konvertierungsregeln (CR) bestimmt ist,
- Bereitstellen (120) der Mehrzahl von Eingangsdaten (ID) aus der Eingangsdatenbank (IDB) in das Eingangsdatenmodell (IDM), um modellierte Eingangsdaten (MID) zu erhalten;
- Ausführen (140) der Mehrzahl von Konvertierungsregeln (CR), um die modellierten Eingangsdaten (MID) des Eingangsdatenmodells (IDM) in modellierte konvertierte Daten (MCD) des formalen Konvertierungsmodells (FCM) basierend auf einem zweiten Datenvalidierungswerkzeug (2) zu konvertieren, wobei das Ausführen der Mehrzahl von Konvertierungsregeln (CR) ein Implementieren, durch das zweite Datenvalidierungswerkzeug, von zertifizierten Computerroutinen umfasst, welche die Konvertierungsregeln (CR) an den modellierten Eingangsdaten ausführen;
- Bereitstellen (150) der Mehrzahl von Ausgangsdaten (OD) aus der Ausgangsdatenbank (ODB) in das Ausgangsdatenmodell (ODM), um modellierte Ausgangsdaten (MOD) zu erhalten;
- Verwenden (160) eines dritten Datenvalidierungswerkzeugs (2), um eine Gültigkeit einer Mehrzahl von Äquivalenzeigenschaften (EP) zwischen den modellierten konvertierten Daten (MDC) und den modellierten Ausgangsdaten (MOD) zu prüfen, wobei das Verwenden des dritten Datenvalidierungswerkzeugs (2), um eine Gültigkeit einer Mehrzahl von Äquivalenzeigenschaften (EP) zu prüfen, ein Implementieren, durch das dritte Datenvalidierungswerkzeug, von zertifizierten Computerroutinen umfasst, welche die Gültigkeit der Mehrzahl von Äquivalenzeigenschaften (EP) prüfen; und wobei das zweite Datenvalidierungswerkzeug und das dritte Datenvalidierungswerkzeug jeweils einer zertifizierten Software entsprechen, welche in der Lage ist, zertifizierte Computerroutinen zu implementieren,
- wobei das Verfahren dadurch:
* verifiziert, dass das Ausgangsdatenmodell (ODM) und das formale Konvertierungsmodell (FCM) beide gleiche modellierte Daten während einer Implementierung des Verfahrens teilen.

2. Verfahren nach dem vorhergehenden Anspruch, wobei das Verfahren ferner ein Verifizieren (130) einer Konformität der modellierten Eingangsdaten (MID) mit einer Mehrzahl erster Konformitätsregeln (C_{f}R1) basierend auf einem ersten Datenvalidierungswerkzeug (2) umfasst.

3. Verfahren nach dem vorhergehenden Anspruch, wobei, wenn die modellierten Eingangsdaten (MID) nicht in Konformität mit wenigstens einer ersten Konformitätsregel (C_{f}R1) sind, das Verfahren gestoppt wird oder das Verfahren ferner ein Zurückgeben (135) der wenigstens einen ersten Konformitätsregel (C_{f}R1) und/oder der modellierten Eingangsdaten (MID) umfasst, für welche die wenigstens eine erste Konformitätsregel (C_{f}R1) nicht erfüllt ist.

4. Verfahren nach einem der vorhergehenden Ansprüche, wobei das Verfahren ferner ein Verifizieren (180) einer Konformität der modellierten Ausgangsdaten (MOD) mit einer Mehrzahl zweiter Konformitätsregeln (C_{f}R2) basierend auf einem vierten Datenvalidierungswerkzeug (2) umfasst, wobei das Verfahren dadurch vorsieht, dass die modellierten Ausgangsdaten (MOD) in Konformität mit den zweiten Konformitätsregeln (C_{f}R2) sind.

5. Verfahren nach dem vorhergehenden Anspruch, wobei, wenn die modellierten Ausgangsdaten (MOD) nicht in Konformität mit wenigstens einer zweiten Konformitätsregel (C_{f}R2) sind, das Verfahren ferner ein Zurückgeben (185) der wenigstens einen zweiten Konformitätsregel (C_{f}R2) und/oder der modellierten Ausgangsdaten (MOD) umfasst, für welche die wenigstens eine zweite Konformitätsregel (C_{f}R2) nicht erfüllt ist.

6. Verfahren nach einem der vorhergehenden Ansprüche, wobei ein Datenvalidierungswerkzeug (2) ein Satisfiability-Modulo-Theories-, SMT-, Solver, oder ein Model-Checker ist.

7. Verfahren nach einem der vorhergehenden Ansprüche, wobei das Eingangsdatenmodell (IDM) in dem ersten Datenvalidierungswerkzeug (2) definiert ist und das Bereitstellen der Mehrzahl von Eingangsdaten (ID) ein Laden der Eingangsdaten (ID) aus der Eingangsdatenbank (IDB) in das Eingangsdatenmodell (IDM) des ersten Datenvalidierungswerkzeugs (2) umfasst.

8. Verfahren nach einem der vorhergehenden Ansprüche, wobei das Ausgangsdatenmodell (ODM) in dem dritten Datenvalidierungswerkzeug (2) definiert ist und das Bereitstellen der Mehrzahl von Ausgangsdaten (OD) ein Laden der Ausgangsdaten (OD) aus der Ausgangsdatenbank (ODB) in das Ausgangsdatenmodell (ODM) des dritten Datenvalidierungswerkzeugs (2) umfasst.

9. Verfahren nach einem der vorhergehenden Ansprüche, wobei die Konvertierungsregeln (CR) durch eine Ausführung von Computerroutinen implementiert sind, welche durch mathematische Beschreibungen definiert sind, welche theoretischen Ergebnissen von Transformationsfunktionen (TF) entsprechen.

10. Verfahren nach einem der Ansprüche 4 bis 9, wobei die Mehrzahl zweiter Konformitätsregeln (C_{f}R2) die Mehrzahl erster Konformitätsregeln (C_{f}R1) und eine Mehrzahl von Ausgangskonformitätsregeln umfasst, welche mit dem Ausgangsformat verknüpft sind.

11. Verfahren nach einem der vorhergehenden Ansprüche, wobei das Eingangsdatenmodell (IDM), das Ausgangsdatenmodell (ODM) und das formale Konvertierungsmodell (FCM) deklarative mathematische Strukturen sind, welche modellierte Daten unter Verwendung von relationaler Algebra verknüpfen.

12. Verfahren nach einem der vorhergehenden Ansprüche, wobei die Mehrzahl von Äquivalenzeigenschaften (EP) Gleichheitseigenschaften und/oder Inklusionseigenschaften zwischen einer Teilmenge von modellierten konvertierten Daten (MCD) und einer Teilmenge von modellierten Ausgangsdaten (MOC) umfasst.

13. Verfahren nach einem der vorhergehenden Ansprüche, wobei, wenn eine Äquivalenzeigenschaft (EP) nicht erfüllt ist, das Verfahren ferner ein Zurückgeben (170) eines Gegenbeispiels umfasst, welches modellierten Daten von wenigstens einem des formalen Konvertierungsmodells (FCM) und des Ausgangsdatenmodells (ODM) entspricht, für welches die äquivalente Eigenschaft (EP) nicht erfüllt ist.

14. Computerprogrammprodukt, welches Anweisungen umfasst, welche, wenn das Programm durch einen Computer ausgeführt wird, den Computer veranlassen, ein Verfahren nach einem der obigen Verfahrensansprüche auszuführen.

15. Computervorrichtung (1), umfassend eine Verarbeitungseinheit (3), welche einen Zugriff hat auf:
- eine Eingangsdatenbank,
- eine Ausgangsdatenbank,
- ein Eingangsdatenmodell,
- ein formales Konvertierungsmodell, und
- ein Ausgangsdatenmodell,
wobei die Verarbeitungsschaltung (3) dazu eingerichtet ist, ein Verfahren nach einem der Ansprüche 1 bis 13 zu implementieren.

## Revendications

1. Procédé mis en œuvre par ordinateur pour vérifier la conversion d'une base de données d'entrée présentant un format d'entrée en une base de données de sortie présentant un format de sortie, la base de données d'entrée comprenant une pluralité de données d'entrée, le procédé comprenant :
- l'accès (110) à :
* un modèle de données d'entrée déterminé sur la base du format d'entrée,
* un modèle de données de sortie déterminé sur la base du format de sortie, et
* un modèle de conversion formel déterminé sur la base du modèle de données d'entrée et d'une pluralité de règles de conversion (CR),
- la fourniture (120) de la pluralité de données d'entrée (ID) provenant de la base de données d'entrée (IDB) au modèle de données d'entrée (IDM) afin d'obtenir des données d'entrée modélisées (MID) ;
- l'exécution (140) de la pluralité de règles de conversion (CR) pour convertir les données d'entrée modélisées (MID) du modèle de données d'entrée (IDM) en données converties modélisées (MCD) du modèle de conversion formel (FCM) sur la base d'un deuxième outil de validation de données (2), dans lequel l'exécution de la pluralité de règles de conversion (CR) comprend l'implémentation, par le deuxième outil de validation de données, de routines informatiques certifiées exécutant lesdites règles de conversion (CR) sur les données d'entrée modélisées ;
- la fourniture (150) de la pluralité de données de sortie (OD) provenant de la base de données de sortie (ODB) au modèle de données de sortie (ODM) afin d'obtenir des données de sortie modélisées (MOD) ;
- l'utilisation (160) d'un troisième outil de validation de données (2) pour vérifier la validité d'une pluralité de propriétés d'équivalence (EP) entre les données converties modélisées (MDC) et les données de sortie modélisées (MOD), dans lequel l'utilisation du troisième outil de validation de données (2) pour vérifier la validité d'une pluralité de propriétés d'équivalence (EP) comprend l'implémentation, par le troisième outil de validation de données, de routines informatiques certifiées vérifiant la validité de la pluralité de propriétés d'équivalence (EP) ;
et dans lequel le deuxième outil de validation de données et le troisième outil de validation de données correspondent chacun à un logiciel certifié apte à implémenter des routines informatiques certifiées,
- ledit procédé permettant ainsi de :
* vérifier que le modèle de données de sortie (ODM) et le modèle de conversion formel (FCM) partagent tous deux les mêmes données modélisées pendant la mise en œuvre du procédé.

2. Procédé selon la revendication précédente, dans lequel le procédé comprend en outre la vérification (130) d'une conformité des données d'entrée modélisées (MID) à une pluralité de premières règles de conformité (C_{f}R1) sur la base d'un premier outil de validation de données (2).

3. Procédé selon la revendication précédente, dans lequel lorsque les données d'entrée modélisées (MID) ne sont pas conformes à au moins une première règle de conformité (C_{f}R1), le procédé est arrêté ou le procédé comprend en outre le renvoi (135) de l'au moins une première règle de conformité (C_{f}R1) et/ou des données d'entrée modélisées (MID) pour lesquelles l'au moins une première règle de conformité (C_{f}R1) n'est pas satisfaite.

4. Procédé selon l'une quelconque des revendications précédentes, dans lequel le procédé comprend en outre la vérification (180) d'une conformité des données de sortie modélisées (MOD) à une pluralité de secondes règles de conformité (C_{f}R2) sur la base d'un quatrième outil de validation de données (2), le procédé garantissant ainsi que les données de sortie modélisées (MOD) sont conformes auxdites secondes règles de conformité (C_{f}R2).

5. Procédé selon la revendication précédente, dans lequel lorsque les données de sortie modélisées (MOD) ne sont pas conformes à au moins une seconde règle de conformité (C_{f}R2), le procédé comprend en outre le renvoi (185) de l'au moins une seconde règle de conformité (C_{f}R2) et/ou des données de sortie modélisées (MOD) pour lesquelles l'au moins une seconde règle de conformité (C_{f}R2) n'est pas satisfaite.

6. Procédé selon l'une quelconque des revendications précédentes, dans lequel un outil de validation de données (2) est un résolveur de satisfiabilité modulo des théories, SMT, ou un vérificateur de modèle.

7. Procédé selon l'une quelconque des revendications précédentes, dans lequel le modèle de données d'entrée (IDM) est défini dans le premier outil de validation de données (2) et la fourniture de la pluralité de données d'entrée (ID) comprend le chargement des données d'entrée (ID) provenant de la base de données d'entrée (IDB) dans le modèle de données d'entrée (IDM) du premier outil de validation de données (2).

8. Procédé selon l'une quelconque des revendications précédentes, dans lequel le modèle de données de sortie (ODM) est défini dans le troisième outil de validation de données (2) et la fourniture de la pluralité de données de sortie (OD) comprend le chargement des données de sortie (OD) provenant de la base de données de sortie (ODB) dans le modèle de données de sortie (ODM) du troisième outil de validation de données (2).

9. Procédé selon l'une quelconque des revendications précédentes, dans lequel les règles de conversion (CR) sont implémentées par l'exécution de routines informatiques définies par des descriptions mathématiques correspondant à des résultats théoriques de fonctions de transformation (TF).

10. Procédé selon l'une quelconque des revendications 4 à 9, dans lequel la pluralité de secondes règles de conformité (C_{f}R2) comprennent la pluralité de premières règles de conformité (C_{f}R1) et une pluralité de règles de conformité de sortie liées au format de sortie.

11. Procédé selon l'une quelconque des revendications précédentes, dans lequel le modèle de données d'entrée (IDM), le modèle de données de sortie (ODM) et le modèle de conversion formel (FCM) sont des structures mathématiques déclaratives reliant des données modélisées à l'aide de l'algèbre relationnelle.

12. Procédé selon l'une quelconque des revendications précédentes, dans lequel la pluralité de propriétés d'équivalence (EP) comprennent des propriétés d'égalité et/ou des propriétés d'inclusions entre un sous-ensemble de données converties modélisées (MCD) et un sous-ensemble de données de sortie modélisées (MOC).

13. Procédé selon l'une quelconque des revendications précédentes, dans lequel lorsqu'une propriété d'équivalence (EP) n'est pas satisfaite, le procédé comprend en outre le renvoi (170) d'un contre-exemple correspondant à une donnée modélisée d'au moins l'un parmi le modèle de conversion formel (FCM) et le modèle de données de sortie (ODM) pour lequel la propriété équivalente (EP) n'est pas satisfaite.

14. Produit-programme informatique comprenant des instructions qui, lorsque le programme est exécuté par un ordinateur, amènent l'ordinateur à réaliser un procédé selon l'une quelconque des revendications de procédé précédentes.

15. Dispositif informatique (1) comprenant une unité de traitement (3) ayant accès à :
- une base de données d'entrée,
- une base de données de sortie,
- un modèle de données d'entrée,
- un modèle de conversion formel, et
- un modèle de données de sortie,
dans lequel le circuit de traitement (3) est conçu pour mettre en œuvre un procédé selon l'une quelconque des revendications 1 à 13.
